Europäisches Patentamt

European Patent Office

Office européen des brevets

(11) Publication number: 0 211 675
A2

# (12) EUROPEAN PATENT APPLICATION

(21) Application number: 86306169.3

(22) Date of filing: 08.08.86

(51) Int. Cl.⁴: H04Q 11/04 , H04M 19/00

(30) Priority: 09.08.85 GB 8520034

(43) Date of publication of application:
25.02.87 Bulletin 87/09

(84) Designated Contracting States:
BE CH DE FR IT LI NL SE

(71) Applicant: PLESSEY OVERSEAS LIMITED
Vicarage Lane
Ilford Essex IGI 4AQ(GB)

(72) Inventor: Priest, Christopher Charles Andrew
Flat 2 Guildersfield Hill Road
Taplow Berkshire(GB)
Inventor: Walker, Ian
12 Dunwood Court Boyne Valley Road
Maidenhead Berkshire(GB)
Inventor: Hancock, Steven
34 Learmonth Grove
Edinburgh EH4 1BW(GB)

(74) Representative: Sorenti, Gino
Intellectual Property Department The
Plessey Company plc 2-60 Vicarage Lane
Ilford Essex IG1 4AQ(GB)

(54) Line terminating apparatus.

(57) To provide facilities to handle many different types of customer line which may be connected to a telephone exchange each line circuit includes adjustable terminating and amplifying devices responsive to signals received from a control unit to adjust - (e.g.) line terminating impedance and gain. The line circuits are grouped together with associated group multiplexers and address decoding facilities. Stored parameters held by the control unit may be dynamically updated in response to changes in line condition detected by power feed circuitry in the line circuits, the power feed circuitry being arranged to provide a constant current feed to the line pair and to send AGC signals reflecting increased or decreased line resistance by way of the respective group multiplexer to the control unit. Other facilities of the apparatus include provision of calling signals to line and the provision of subscriber private metering (SPM) signals. Each pulse of dialled digits is detected in the line circuit and multiplexed to the control unit which accumulates the dialled digits forwarding each complete digit to the communications exchange.

## Line Terminating Apparatus

The present invention relates to line terminating apparatus and more particularly to line terminating apparatus for interfacing customer telephone lines and computer controlled telecommunications exchanges.

It will be appreciated that a telecommunications exchange needs to provide facilities to handle many differing types of customer line. For example certain customer instruments indicate line seizure using loop calling while other customer connections indicate seizure by application of a specific condition (say an earth signal) on one or other leg of the customer line pair.

The advent of digital switching or time division multiplex (TDM) switching creates further problems in that analogue voice or tone signals from the customer line must be converted to digital signals at the exchange and digital signals from the exchange must be converted to analogue signals for return to the customer line. Other facilities required at an exchange interface also include the provision of a power feed to the customer, provision of calling signals and monitoring activity on the line.

The monitoring of activity on the customer line in computer controlled exchanges is often carried out by direct scanning of the line at periodic intervals by a central processor unit of the exchange which utilises a considerable amount of the processor units capability which reduces the operating efficiency of the exchange system.

It is one object of the present invention to provide line terminating apparatus for use in a telecommunications exchange which apparatus is capable of interfacing many types of customer line to the exchange and which reduces the need for continuous direct line scanning by a control unit of the exchange.

According to the present invention there is provided line terminating apparatus comprising a control unit and a plurality of groups of $n$ line circuits (where $n$ is an integer of at least 2), each of said line circuits is arranged for connection to a respective line pair, said control unit comprising an interface for inter-communication of data with a processor controlled telecommunications exchange, a memory for storing data relating to line conditions of each connected line pair and processing means, each of said plurality of groups comprising at least one multiplexer arranged to concentrate at least one data parameter from the $n$ respective line circuits in the group and address decoding means arranged to recognise addressing signals received from said control unit which signals identify one of the $n$ respective line circuits in the group and to enable a line circuit so addressed to interchange data with said control unit, said processing means being arranged to cause addressing of each line circuit at periodic intervals to transmit respective data parameters from said memory and to receive data relating to activity on the respective line pairs whereby line parameters initially specified by said processor controlled exchange are periodically refreshed in the line circuits and data received from the line circuits may be pre-processed and concentrated for forwarding to said processor controlled exchange.

Preferably the stored data parameters relate to loop conditions of each line pair said data being used to adjust amplification of signals received from or sent to said line pairs.

Said stored parameters may include data relating to terminating impedances which data may be used to adjust programmable impedances across a connected line pair.

The line circuit preferably includes two-wire to four-wire conversion and analogue-to-digital conversion circuits whereby analogue signals received from said line pairs are converted to digital levels for forwarding to said telecommunications exchange on a first two-wire path and digital signals received from said telecommunications exchange on a second two-wire path are converted to analogue signals for forwarding to said line pairs.

Said analogue-to-digital conversion circuits may be arranged to convert analogue signals to linear pulse coded modulation (PCM) signals which linear PCM signals are concentrated in said control circuit and converted to A-law PCM signals for forwarding to a digital switching system of said telecommunications exchange. In the reverse direction A-law encoded PCM signals received from the digital switching system may be converted to linear PCM signals in said control circuit which circuit causes such signals to be distributed to digital-to-analogue conversion circuits in the respective line units.

Each of said line circuits may include switching means arranged when operated to apply calling signals to the respective connected line pair, said switching means operating under control of said processing means in said control unit whereby cadencing of calling signals may be determined in said line control unit.

Each of said line circuits may also include a controllable power feed circuit said circuit being responsive to conditions on the line pair to increase or decrease the voltage applied thereto to maintain a constant current feed to the line. Said power feed circuit may include means to provide a loop resistance signal to said line control unit reflecting the line conditions which signals may be used by said processing means to adjust the data stored in respect of gain settings to be applied to said line circuit. Preferably said loop resistance signal is multiplexed in said group multiplexer for forwarding to said line control unit.

The control unit may include tone generation means arranged to provide signals for application to the line pairs to effect operation of remote metering apparatus. Said signals may be distributed to each of said line circuits each of which may include means operable in response to signals from said control unit to mix said signals with speech signals forwarded to the connected line pair.

Line terminating apparatus in accordance with the invention will now be described by way of example only with reference to the accompanying drawings of which:-

Figure I is a block schematic diagram of apparatus for terminating up to sixty-four customer lines;

Figure 2 is a block schematic diagram of a line unit of Figure I;

Figure 3 is a block schematic diagram of the control unit of Figure I;

Figure 4 shows a part of Figure 2 to show line protection elements in further detail;

Figure 5 is a block schematic diagram of a subscriber line interface circuit of Figure 2;

Figure 6 is a block schematic diagram of a subscriber line access circuit of Figure 2.

Referring first to Figure I, the apparatus is arranged to interwork with a processor controlled digital switching system (not shown) such as the switching system known in the United Kingdom as "System X". Such a switching system may be equipped with a number of such line terminating apparatus each of which comprises a line control unit I which, in the specific example shown, services eight subscriber line units 2-9 each of which services eight subscriber lines. Accordingly in the specific example shown the line terminating apparatus interfaces sixty-four subscriber lines to the switching system and provides facilities to sixty-four lines as hereinafter described.

To ensure that a power supply failure does not have a catastrophic effect on an entire exchange, each group of line control unit I plus eight subscriber line units 2-9 has an individual power supply unit I0 which is coupled to an exchange power supply and which derives from that supply all necessary voltages for operation of the apparatus. Since suitable power supply unit technology is well known in the art, further consideration of the power supply unit per se is not given herein.

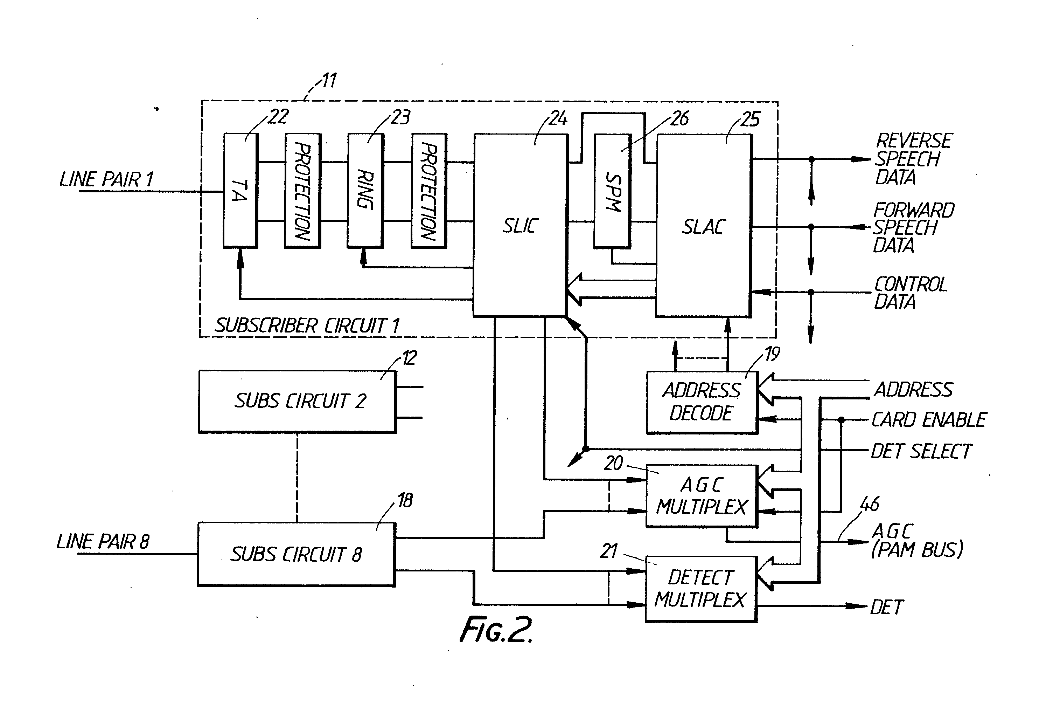

Referring now to Figure 2, each of the subscriber line units 2-9 of Figure I comprises eight subscriber circuits II-I8 (only one of which is shown in full) together with three items of common equipment namely an address decode I9 and two signal multiplexers 20 and 2I the functions of which are explained later in the text.

Each of the subscriber circuits (II-I8) comprises a subscriber line access 25 circuit (SLAC) which interfaces analogue signals to and from the line pair with digital signals from and to the digital switching system and which interfaces instruction and clock signals from the line control unit (I of Figure I) with a subscriber line interface circuit 24. The subscriber line interface circuit (SLIC) 24 acts as a two-wire to four-wire transformer, provides power feed to the line, provides call answer detection and, in response to instructions received by way of the SLAC 24 supports ringing and test access facilities through respective relays 23 and 22.

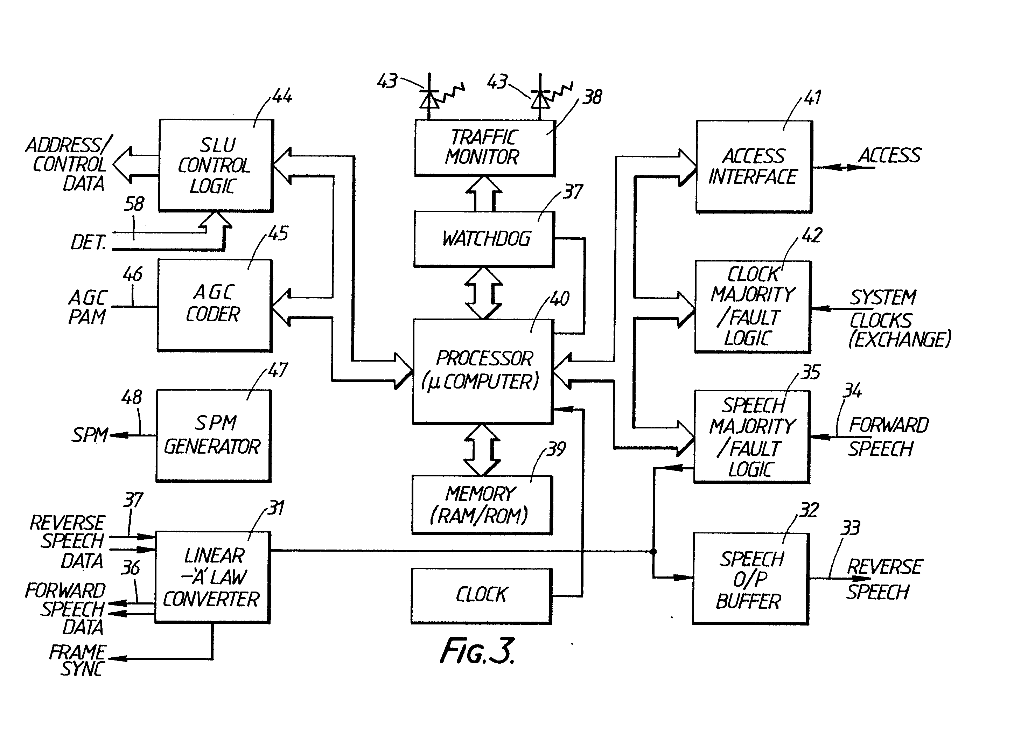

Referring now to Figure 3 the line control unit (I of Figure I) interfaces between the line units (2-9 of Figure I) and the switching system. The line control unit comprises a linear-to-A law converter which receives speech data from the line units in pre-assigned time slots on a path 37, converts the data from linear to A-law coding and forwards the A-law encoded speech data by way of a speech output buffer 32 to the digital switching system on a line 33.

In the other direction the linear-to-A law converter 3I receives A law encoded pulse code modulated (PCM) data from the switching system by way of fault logic 35 and a line 34. In this case the A law encoded PCM is converted to linear coding and forwarded to the line units on a forward speech data path 36. The precise functioning of the converter 3I is not discussed herein in detail but is fully described in our co-pending Patent Application No. (LC/I522).

The line control unit is provided with a processor 40 such as a microcomputer which has an associated memory 39. The processor 40 receives and transfers data from and to the digital switching system by way of an access circuit 4I which is effectively a parallel-to-serial and serial-to-parallel converter interfacing with the protocol of the switching system.

Timing for the line control unit and the associated line units is derived from the switching system clocks by way of clock logic 42 which is arranged to select clock data from one of three clocks available. A full description of the clock logic 42 may be found in our co-pending Patent Application No. (LC/I520).

In common with many exchange system peripherals the line control unit is provided with a watchdog timer 37 which is periodically reset by the processor 40. The watchdog timer 37 is arranged, if it is not reset within a predetermined period, to cause the processor 40 to enter a program loop which requests re-initialisation from the central processor of the digital switching system.

In alternative methods of operation the watchdog timer 37 may be arranged to output an alarm or to close down the affected peripherals.

The line control unit I also include a traffic monitor circuit 38 which detects the presence of activity in the line control unit which relates to seizure of one or more lines by subscribers on the subscriber line units. The traffic monitor 38 on detecting such activity causes an appropriate visual indication of the active line unit by illuminating one of eight light emitting diodes 43 to indicate to maintenance staff that the line control unit and active line units should not be removed for maintenance.

The line control unit interfaces with the line units by way of control logic 44 on which data and address signals are transmitted. Also situated in the line control unit is a coder 45 which receives gain control signals from the line units on a pulse amplitude modulated (PAM) highway 46. The functioning of the coder 45 is more fully discussed hereinafter.

The line control unit also includes a tone generator 47 which provides a frequency tone for transmission to line to operate subscribers private metering (SPM) apparatus. The tone signal is supplied to the line units by way of a connection 48 and is either a sixteen kilo-hertz or twelve kilo-hertz signal in dependence upon the requirements of the administration. Since many tone generators may be used the specific functioning of the tone generator 47 is not discussed further herein. However, a suitable tone generator is described in detail in our co-pending Patent Application No. (LC/I52I).

Having outlined the basic arrangement of the apparatus of the present invention it is now considered that a detailed description of the manner in which the apparatus handles a number of exemplary facilities for subscribers lines will assist understanding.

Accordingly reference should now be made to Figures I,2 and 3.

As will be appreciated the "test access" facility permits engineer or automatic testing of the subscriber line pairs in both directions. Thus the TA relay 22 when operated connects the subscriber line pair which is to be tested to an exchange test access highway. The instruction to operate the relay 22 is received from the switching system by way of the access interface 4I. On receipt of a test access line "N" instruction from the switching system the processor 40 decodes the instruction and forwards addressing and data signals through control logic 44 to the appropriate line unit (2-9).

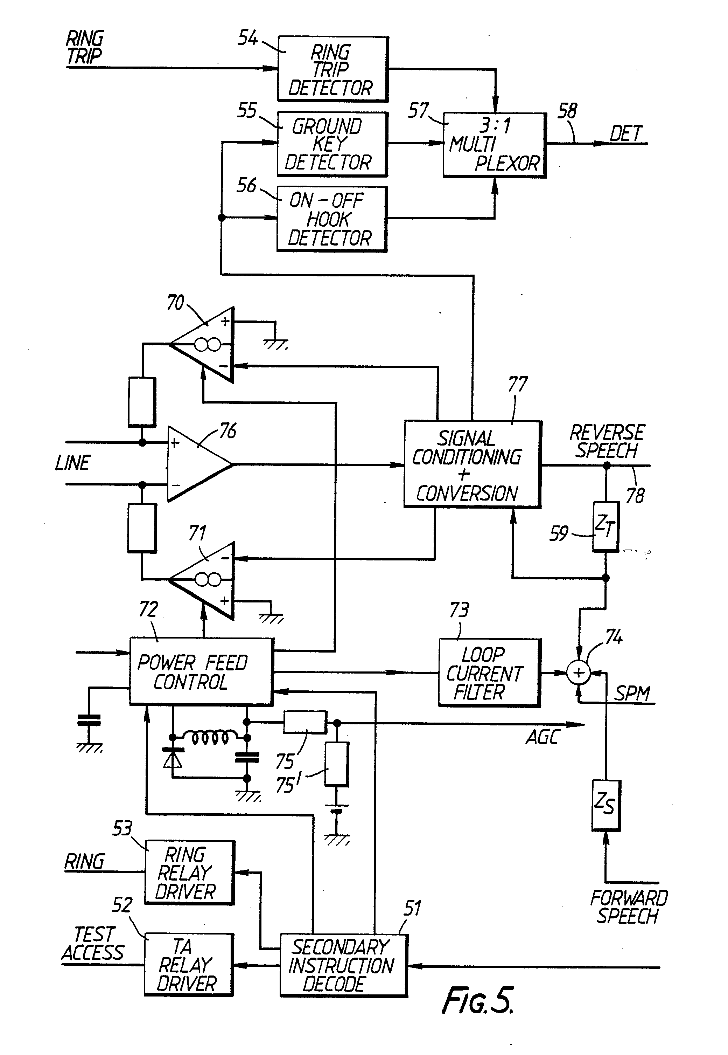

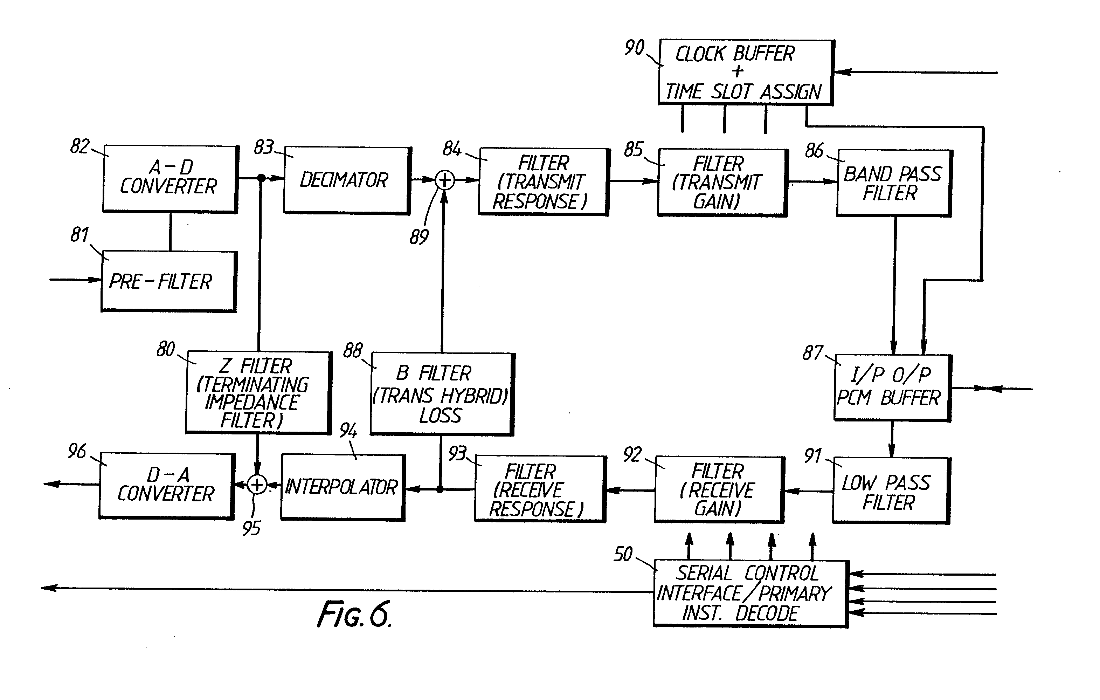

In the line unit the address decode I9 enables the appropriate SLAC 25 which receives and decodes the instruction in a primary instruction decode 50 (Figure 6) whence the signal is forwarded to a secondary instruction decode 5I (Figure 5) in the SLIC 24. The signal decoded by the secondary decode 5I causes a relay driver 52 in the SLIC 24 to drive effecting operation of the relay 22. Once testing is completed by the exchange an instruction to disconnect test access "N" is decoded on the same route.

The second facility provided by the subscriber circuits II to I8 is that of secondary line protection. This facility protects the exchange circuitry from accidental or deliberate application of mains or other electricity (AC or DC) to the customer line pair and also provides protection from other induced voltages such as residual lightning peaks (sometimes called sidestroke).

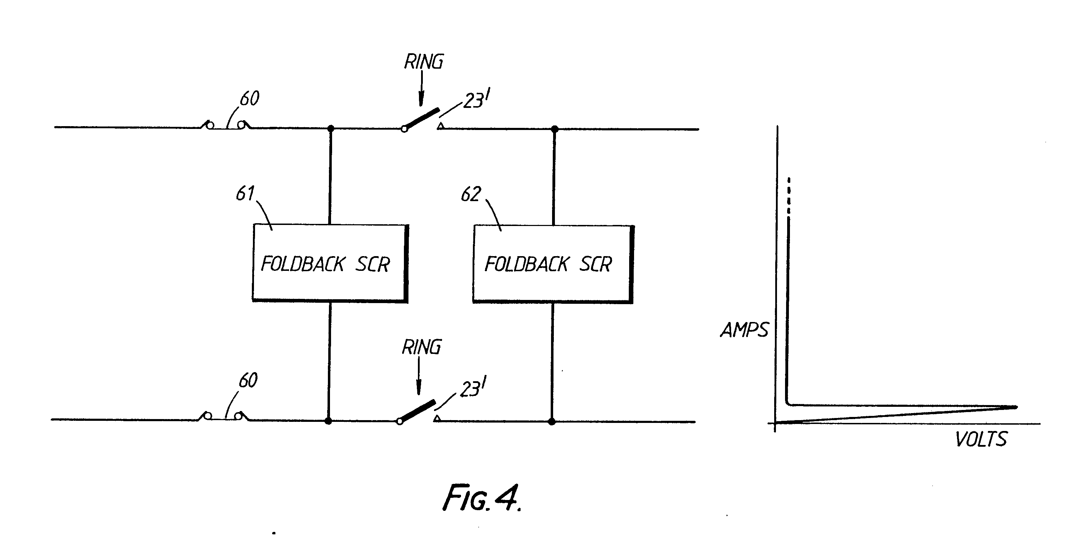

Three levels of protection are provided which, referring to Figure 4 comprise line fuses in series with the line pair and two foldback SCRs (transient voltage suppressors) 6I and 62 across the line pair.

The function of the fuses is as is well known to prevent excessive currents passing through the line pair. The foldback SCR is not as well known but its operation may be seen from the accompanying graph where as shown the current passing through the device is a function of voltage (and is of the order of milliamps) until a firing voltage is reached. Once the firing voltage is reached the device conducts very high currents with a very low voltage drop (approximately two volts) ensuring relatively low heat dissipation in the device itself.

The foldback SCR 62 is arranged to fire at approximately 65 volts providing protection for the ]lectronic circuitry of the line circuit whilst not triggering on normal line supplies of fifty volts. However, as is known the ringing or calling signals applied to instruments usually exceed seventy five volts AC which would trigger the foldback SCR 62 which consequently cannot be placed in front of contacts of the ring relay 23. Therefore the protection provided in front of the ring relay contacts 23', namely the foldback SCR 6I is arranged to fire at plus or minus 200 volts therefore not inhibiting ringing application.

It will be noted that the protection provided by the foldback SCRs 6I and 62 reduces the tolerance requirements of the fuses 60 which can accordingly be manufactured more cheaply since the current at which the fuse blows is less critical to the protection of the exchange apparatus.

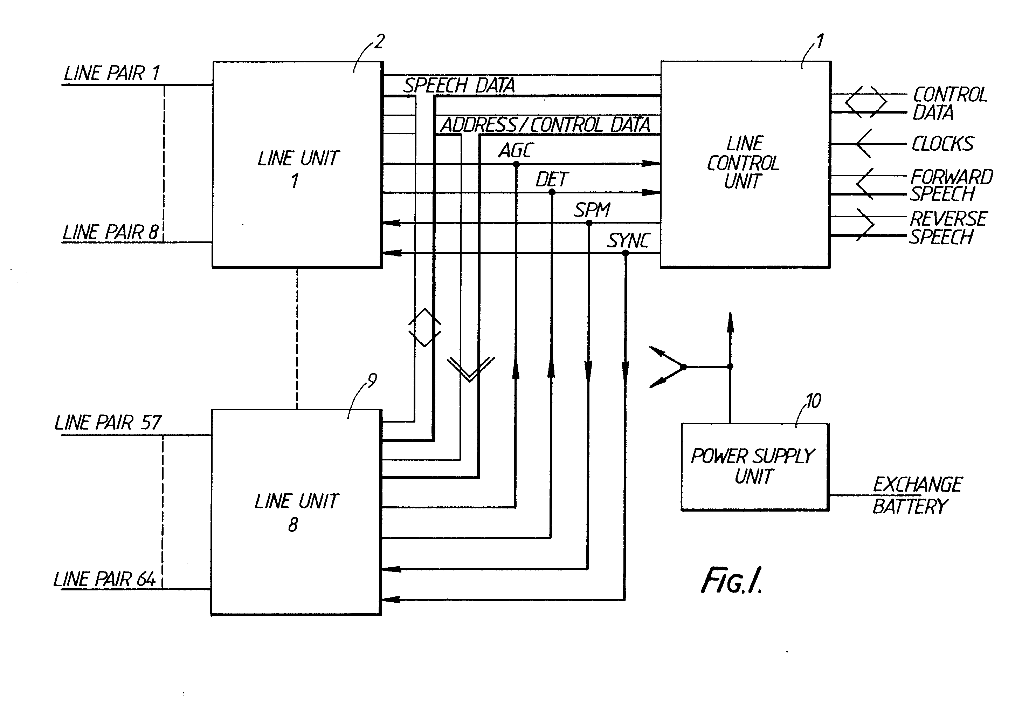

Since the location of the ring relay 23 has been mentioned it is appropriate to consider the manner in which ringing signals are applied to the line. Thus referring again to Figures 1,2,3,5 and 6 the ring relay 23 is operated on a similar route to the test access relay 22 namely from the processor 40 of the line control unit 1, through the control logic 44 addressing of the particular line unit and subscriber circuit occurs. The primary instruction decode 50 and secondary instruction decode 51 then cause a ring relay driver 53 to operate or release the ring relay 23.

The feed to the ring relay contacts 23' is a continuous ringing signal from a ringing machine in the exchange, cadencing of the signal being provided by the processor 40. Thus the ringing cadence may be programmed to suit the requirements of the telecommunications administration and ringing always commences at the same point in the sequence of the cadence. This enables a much less complex ringing machine to be provided in the exchange and eliminates the need for such facilities as the supply of "first burst" ringing.

It is here noted that both of the relays 22 and 23 are electro-mechanical two pole change-over relays of the kind usually referred to as subminiature.

For ring trip detection on customer answer three separate detectors are provided in the SLIC 24 these being respectively a ring trip detector 54 operating from a ring trip filter linked to the ringing relay 23, a ground key detector 55 to detect private branch exchange operator answering action and an on-off hook detector 56 which detects answering conditions in silent periods of the ringing cadence. Any answer detection by the three units 54,55,56 is fed back by a three-to-one multiplexer 57 to a detect lead 58 and thence through the control logic 44 to the processor 40 which in turn forwards a call answer message through the access interface 41 to the digital switching system.

The two wire terminating impedance for the subscriber line pair is provided by an impedance 59 between the SLAC and the SLIC 24. The action of line amplifiers 70,71 reproduces the terminating impedance 59 on the line pair at one thousandth of its magnitude. Although the terminating impedance 59 is a fixed value device the terminating impedance may be modified by a Z-filter component 80 in the SLAC 25 which is programmably adaptable as hereinafter described from the processor 40 of the line control unit 1.

A further facility provided by the SLIC 25 is that of line current feed. As is known line resistance varies in dependence upon line length. In the present system a constant current feed of forty milli-amperes is provided to the line pair when the subscriber instrument is off-hook. In the on-hook condition a feed of four milli-amperes is provided for on-line battery charging for example. It is here noted that with a line loop in excess of 1.1 kilo ohms constant voltage (at the maximum available) is provided to the line.

The line feed is under control of a power feed controller 72 and injects a constant forty micro-amp current to the audio loop through a filter 73 and an adder circuit 74. The audio loop having a loop gain of one thousand ensures a forty milli-amp feed to the line. It is here noted that the power feed controller 72 is fed from a -63 volt d.c. source not from the exchange battery direct to give greater scope for constant current feed.

A further function of the power feed controller 72 is to provide a line length indication to the line control unit 1 enabling the line control unit to provide an audio gain control function.

For this purpose a voltage signal is derived on a resister chain 75,75' to provide an output signal representing the voltage applied to the line to maintain the required forty milli-amp off-hook current. This signal is output to the AGC multiplexer 20 of the line unit and is periodically sent on a pulse amplitude modulated highway 46 to the AGC coder 45 of the line control unit. The AGC coder converts the amplitude signal to a two bit digital signal indicating one of four possible gain setting levels to the processor 40. The processor 40 uses the gain setting levels (although in practice only these are used) as hereinafter described to set gain parameters in the SLAC 25.

We shall now consider the speech path through the terminating apparatus. The principle function of the unit is to provide two-wire to four-wire conversion and analogue-to-digital conversion functions with all necessary line balancing and "echo" cancellation.

As has been mentioned the complete apparatus of the present invention provides facilities for 64 subscriber lines, eight on each of eight line units 2-9 controlled by a single line control 1 unit which interfaces with a digital switching system. Within this module two pulse-code-modulated - (PCM) data streams are generated for forwarding to the switching system and two PCM data streams are received from the switching system each of the generated and received streams servicing thirty-two line pairs.

Now referring to Figures 3,5 and 6 speech received from the line pair passes through a one way amplifier 76 and a signal conditioning circuit 7 to a reverse speech path 78 to the SLAC 25.

In the SLAC 25 the speech signal is filtered by a circuit 81 and converted to digital levels in an A-D converter 82 which operates at 128 kilo-hertz producing sixteen bit linear encoded PCM samples. A decimator 83 takes the digital output from the converter 82 and adjusts the output to an eight kilohertz sampling rate required by the other PCM highways in the exchange.

To compensate for four-wire return loss a portion of the output digital signal is fed back through a programmable filter 88 inverted and is added in to the sixteen bit linear PCM samples in an adder 89 prior to digital filtering. The parameters of the filter 88 are set up by the line control unit I as discussed later in the specification.

The signal is then digitally filtered in a filter 84 and the gain digitally adjusted by a further filter 85 prior to passing through a digital band-pass filter 86 to a PCM buffer 87. It is here noted that frame synchronisation signals are derived by a clock buffer 90 from frame synchronisation signals from the linear to A-law converter 3I.

In the appropriate time slot the PCM signals are forwarded on the PCM highway 37 to the linear to A-law converter 37 whence the A-law encoded PCM signal is transferred by way of the output buffer 32 to the PCM highway 33 of the digital switching system.

In the opposed direction A-law encoded PCM signals received from the PCM highway 34 and the fault logic circuit 35 are converted to linear encoded PCM by the converter 3I and sent to the SLAC 25 on the highway. These signals are now adjusted digitally by a low pass filter 9I, gain filter 92 and response filter 93 in similar manner to the signals received. An interpolator 94 converts the eight kilo-hertz linear PCM samples to I28 kilo-hertz after which echo cancelling is carried out by adding in an inverted portion of the received signal through the programmable filter 80 using an adder 95. This linear signal is converted by a digital-to-analogue converter for output to the line pair through the SLIC 24.

The channels of the two PCM forward and reverse data streams are fixed by wiring on the equipment shelf in which the line units are inserted thus ensuring that all line units are interchangeable. Line pairs I to 32 are allocated channels 0 to 3I of the first bit stream and line pairs 33-64 to channels 0-3I of the second bit stream. However, rather than allocating adjacent line pairs to adjacent channels the line units 2 and 6 take for example respective channels 0,2,4,6,8,I0,I2 and I4 while line units 3 and 7 take respective channels I,2,5,7,9,II,I3 and I5. Similarly the line units 4 and 8 take respective even channels I6 to 30 and the line units 5 and 9 take respective odd channels I7 to 3I.

As has been previously stated various elements in the individual subscriber circuits II-I8 are programmable and certain line facilities also require provision or denial in dependence on central control of the exchange.

When the apparatus is first powered up (or if the watchdog timer 37 has indicated a fault condition) the processor 40 ensures that the SLIC 24 inhibits power feed to its respective line pair and has the ring relay 23 in a non-operated condition. The processor 40 now sends a message via the access circuit 4I to the digital switching system requesting initialisation. In response to this message the central control system downloads parameters (which have been programmed by engineering action) to the module in respect of each of the sixty-four line pairs. It is here noted that parameters affecting individual lines only may be downloaded by the exchange control system at any time.

The downloaded parameters primarily relate to gain control and loop characteristics permitting setting up of the various programmable filters and amplifiers in the SLAC 25. The downloaded parameter in respect of gain is one of five predetermined settings or AGC as previously mentioned. The first three settings applicable to shorter line lengths are equivalent to three variable settings provided by the AGC arrangement while the two higher settings are used for long lines. In practice lines which normally require one of the three lower settings will usually be set to AGC.

For the filters 80 and 88 which relate to balance impedance characteristics one of several complex impedances is downloaded and line type parameters such as the loop signalling characteristics, requirement for private metering output and other special facilities are also downloaded.

The line control unit I causes this downloaded data to be stored in its associated memory 39 and uses the data so stored to set the individual subscriber circuits II-I8 in each of the line units 2-9 appropriately. These parameter settings of the line circuit are periodically refreshed by the processor 40.

Other facilities parameters which may be downloaded include power denial which effectively disconnects the line pair by inhibiting application of power feed through the SLIC 24.

It will be realised that in downloading parameters for all sixty-four subscriber line pairs at one time a considerable central control processing saving is made since the line control unit I, addresses the eight line units 2-9 which in turn address the eight subscriber circuits II-I8.

A further facility provided by the apparatus is in detection of digits dialled by a subscriber. In this case when an instrument connected to a line pair goes off hook this is detected by the off hook detector 56 which feeds back an off-hook signal by way of the detect lead 58 and the multiplexer 2I to the processor 40. This causes the processor 40 to send a subscriber off-hook message to the switching system.

The on-off hook detector 56 now indicates each change of state by way of the detect lead 38 to the processor 40 which times the respective states to determine each make and break pulse from the subscriber instrument and inter-digital pauses - (IDP). The processor 40 accumulates the pulses and in the IDP forwards a complete digit to the switching system by way of the access circuit 4I. This obviates the need for regular line scanning by any of the other elements of the exchange.

Once a call set up is complete (or in the event of a call being abandoned) the on-hook condition is again detected by the detector 56 and forwarded to the processor 40 which generates an appropriate message to the digital switching system.

During calls the line control unit I also controls the timing and output of private metering signals to the line pairs from the SPM generator 47 by way of the adder circuit 74 into the audio loop of the line pair.

In the event that a call is not completed or the subscriber leaves the instrument handset off-hook, the line control unit causes power feed to the line pair to be reduced (to the four milli-ampere level). The line is still monitored by the respective SLIC 24 and line control unit I for a change of state indicating that the handset has been replaced such that normal operating parameters may again be applied.

For the avoidance of doubt it is here noted that the addressing of the subscriber circuits II-I8 and line units 2-9 by the line control unit I for effecting the transfer of parameters to the SLAC 5 control of ringing cadences and application of SPM signals and reading of data such as detection and AGC is performed on a regular scan. In practice the scanning time is a five millisecond interrupt cycle.

Accordingly the apparatus hereinbefore described provides each line pair with protection, power feed, line supervision and optimum transmission characteristics. Intercommunication of data is effected using addressing and multiplexing techniques through eight line units and one line control unit whilst using exchange processor time to perform only major processing tasks such as call set up and initialisation.

## Claims

I. Line terminating apparatus comprising a control unit and a plurality of groups of $n$ line circuits - (where $n$ is an integer of at least 2), each of said line circuits is arranged for connection to a respective line pair, said control unit comprising an interface for inter-communication of data with a processor controlled telecommunications exchange, a memory for storing data relating to line conditions of each connected line pair and processing means, each of said plurality of groups comprising at least one multiplexer arranged to concentrate at least one data parameter from the $n$ respective line circuits in the group and address decoding means arranged to recognise addressing signals received from said control unit which signs indentify one of the $n$ respective line circuits in the group and to enable a line circuit so addressed to interchange data with said control unit, said processing means being arranged to cause addressing of each line circuit at periodic intervals to transmit respective data parameters from said memory and to receive data relating to activity on the respective line pairs whereby line parameters initially specified by said processor controlled exchange are periodically refreshed in the line circuits and data received from the line circuits may be pre-processed and concentrated for forwarding to said processor controlled exchange.

2. Line terminating apparatus as claimed in claim I wherein the stored data parameters include data parameters relating to loop conditions of each line pair.

3. Line terminating apparatus as claimed in claim 2 wherein said data parameters relating to loop conditions are used to adjust amplification of signals received from or sent to said line pairs.

4. Line terminating apparatus as claimed in claim I, claim 2 or claim 3 wherein said stored data parameters include data relating to terminating impedances for each line pair, such data being used to adjust programmable impedances connected across the line pairs.

5. Line terminating apparatus as claimed in any preceding claim wherein each line circuit includes two-wire to four-wire conversion circuitry for each line pair whereby signals received from such line pairs are forwarded to a connected communications exchange on a forward two wire circuit and signals received from such communications exchange on a reverse two wire circuit are forwarded to such line pairs.

6. Line terminating apparatus as claimed in claim 5 wherein each line circuit includes an analogue to digital conversion circuit and a digital to analogue conversion circuit whereby analogue signals received from the line pairs are converted to digital levels for forwarding to the exchange and digital signals received from the exchange are converted to analogue for forwarding to the line pairs.

7. Line terminating apparatus as claimed in claim 6 wherein said analogue to digital conversion circuit converts analogue signals to linear encoded pulse code modulated (pcm) digital signals and said digital to analogue conversion circuit converts linear encoded pcm digital signals to analogue signals.

8. Line terminating apparatus as claimed in claim 7 wherein pcm signals to and from the line circuits are time division multiplexed (tdm) onto a digital bus from and to the control unit.

9. Line terminating apparatus as claimed in claim 8 wherein the control unit includes a linear to A-law conversion circuit and an A-law to linear conversion circuit, said circuits respectively being arranged to convert a linear encoded pcm-tdm data stream from the line circuits to an A-law encoded pcm-tdm data stream for forwarding to the exchange and to convert an A-law encoded pcm-tdm data stream received from the exchange to a linear encoded pcm-tdm data stream for forwarding to the line circuits.

10. Line terminating apparatus as claimed in any preceding claim wherein each line circuit includes switching means responsive to signals received from the processing means of the control unit to apply calling signals to the respective connected line pair whereby cadencing of calling signals may be programmed in said control unit.

11. Line terminating apparatus according to any preceding claim wherein each line circuit includes a power feed circuit which is responsive to conditions on the connected line pair to increase or decrease the voltage applied thereto.

12. Line terminating apparatus according to claim 11 wherein said power feed circuit provides signals to said control unit reflecting loop resistance of the respective connected line pair, said control unit being arranged to modify the stored data parameters to increase or decrease gain settings to be applied in said line circuit.

13. Line terminating apparatus according to claim 12 wherein the signals from the power feed circuits are multiplexed in each group by said at least one mulitplexer for forwarding to the control unit.

14. Line terminating apparatus according to any preceding claim wherein said control unit includes tone generation means arranged to provide tones for application to the line pairs to effect operation of remote metering apparatus.

15. Line terminating apparatus according to claim 14 wherein each of said line units includes means operable in response to signals from said control unit to mix the signals from said tone generation means with speech signals forwarded to the connected line pair.

16. Line terminating apparatus according to any preceding claim wherein each of said line circuits includes means operable in response to signals received from said control unit to effect interconnection between the respective connected line pair and a line pair of the exchange whereby testing of the forward and reverse paths from the line circuit may be carried out by the exchange apparatus.

17. Line terminating apparatus according to any preceding claim wherein each of said line circuits includes detection means responsive to signals on the respective line pair which signals provide answer or calling indications to the exchange, said detector means providing signals to the control unit indicating a change of status of the line.

18. Line terminating apparatus according to claim 17 wherein the signals from the detection means are multiplexed in the group multiplexer for forwarding to the control unit.

19. Line terminating apparatus according to claim 17 or claim 18 wherein said detection means also detects signals relating to routing information which signals are received from the connnected line pair.

20. Line terminating apparatus according to claim 19 in which the control unit is arranged to accumulate the signals received by the detector means of each of said line circuits, said control unit forwarding the information to a connected exchange on receipt of a complete digit of such routing information.

Fig.1.

LINE PAIR 1

LINE UNIT 1 — 2

LINE PAIR 8

LINE PAIR 57

LINE UNIT 8 — 9

LINE PAIR 64

SPEECH DATA

ADDRESS/CONTROL DATA

AGC

DET

SPM

SYNC

LINE CONTROL UNIT — 1

CONTROL DATA

CLOCKS

FORWARD SPEECH

REVERSE SPEECH

POWER SUPPLY UNIT — 10

EXCHANGE BATTERY

0 211 675

FIG.2.

LINE PAIR 1

SUBSCRIBER CIRCUIT 1

TA 22
PROTECTION
RING 23
PROTECTION
SLIC 24
SPM 26
SLAC 25

REVERSE SPEECH DATA
FORWARD SPEECH DATA
CONTROL DATA

SUBS CIRCUIT 2 12

SUBS CIRCUIT 8 18

LINE PAIR 8

ADDRESS DECODE 19

ADDRESS
CARD ENABLE
DET SELECT

AGC MULTIPLEX 20

AGC (PAM BUS) 46

DETECT MULTIPLEX 21

DET

0 211 675

FIG. 3.

ADDRESS/CONTROL DATA

SLU CONTROL LOGIC — 44

58 DET.

AGC PAM — 46

AGC CODER — 45

SPM — 48

SPM GENERATOR — 47

REVERSE SPEECH DATA — 37

FORWARD SPEECH DATA — 36

FRAME SYNC

LINEAR –'A' LAW CONVERTER — 31

43 43 38

TRAFFIC MONITOR

WATCHDOG — 37

PROCESSOR (μ COMPUTER) — 40

MEMORY (RAM/ROM) — 39

CLOCK

ACCESS INTERFACE — 41

ACCESS

CLOCK MAJORITY /FAULT LOGIC — 42

SYSTEM CLOCKS (EXCHANGE)

SPEECH MAJORITY /FAULT LOGIC — 35

FORWARD SPEECH — 34

SPEECH O/P BUFFER — 32

REVERSE SPEECH — 33

0 211 675

FIG. 4.

Fig.5.

Fig. 6.

0 211 675